# EUROPÄISCHE PATENTSCHRIFT

(11) **EP 3 371 493 B1**
(45) Veröffentlichungstag und Bekanntmachung des Hinweises auf die Patenterteilung: **25.09.2019**
(21) Anmeldenummer: 16781093.6
(22) Anmeldetag: 10.10.2016
(51) Int. Cl.: F16K 31/143, B65D 90/34, F16K 24/00, F16K 24/06, F16K 27/02

(54) **TANKSICHERUNGSARMATUR UND TANK**
TANK SECURING FRAME AND TANK
ARMATURE DE SÉCURITÉ DE RÉSERVOIR

(30) Priorität: 06.11.2015 DE 102015221895
(43) Veröffentlichungstag der Anmeldung: 12.09.2018
(73) Patentinhaber: Evoguard GmbH, 93149 Nittenau (DE)
(72) Erfinder: SAUER, Martin, 93149 Nittenau (DE)
(74) Vertreter: Grünecker Patent- und Rechtsanwälte PartG mbB
(86) Internationale Anmeldenummer: PCT/EP2016/074141
(87) Internationale Veröffentlichungsnummer: WO 2017/076579

(56) Entgegenhaltungen:
- AU-B2- 618 316
- AU-B2- 618 316
- US-A- 2 028 756
- US-A1- 2011 056 938

## Beschreibung

Die Erfindung betrifft eine Tanksicherungsarmatur gemäß Oberbegriff des Anspruchs 1 und einen Tank gemäß Anspruch 17.

Bei der Produktion flüssiger Lebensmittel, insbesondere in Brauereien, werden z.B. in Getränkeabfüllanlagen Tanks mit einem Volumen bis zu 800 m³ eingesetzt, die eine sehr begrenzte Festigkeit gegen Unterdruck haben. Gründe für das Entstehen eines Unterdrucks sind beispielsweise eine Systementleerung mittels Pumpe, ein unbeabsichtigtes Entleeren des Systems, oder physikalische Zustandsänderungen des bevorrateten Mediums und/oder Gärungsvorgänge, und dergleichen. Ein zulässiger Unterdruck in solchen Tanks beträgt oftmals nur 10 mbar. Zur Unterdruckabsicherung werden, beispielsweise in einer Tanksicherungsarmatur, Vakuumventile in unterschiedlichen Baugrößen verwendet, welche einen Ansprechdruck von nur 3 bis 4 mbar haben und einen entsprechenden Volumendurchsatz aufweisen. Es werden für größere Tanks nahezu ausschließlich gewichtsbelastete Vakuumventile eingesetzt, die mit senkrecht stehender Ventilstange verbaut sind, um die Reibung zu reduzieren und das Ansprechverhalten zu gewährleisten. Es gibt auch federbelastete Vakuumventile, die stehend verbaut sind, wobei das Nennweitenspektrum begrenzt ist, so dass senkrecht verbaute, federbelastete Vakuumventile für die Absicherung größerer Tanks nicht in Frage kommen. Die Vakuumventile sollen sitzreinigungsfähig ausgelegt sein und weisen meist eine Anlüftvorrichtung auf. Eine einwandfreie Reinigung ist erforderlich, da ein verschmutzter Dichtsitz zum Ankleben des Ventiltellers führen kann, so dass der Ansprechdruck den zulässigen Tankdruck überschreitet. Bei der Reinigung durch den Dichtsitz strömendes Medium wird bei einigen Vakuumventilen durch eine Fangschale aufgefangen und kontrolliert abgeführt. Bei gewichtsbelasteten Vakuumventilen ist aufgrund der Bauform eine Auffangvorrichtung für das Reinigungsmedium nicht vorhanden.

Beim Zusammenfassen von Armaturen aus Vakuumventil, Sicherheitsventil gegen Überdruck, Messtechnik und Reinigungstechnik in einer Tanksicherungsarmatur ist der zwingend senkrechte Einbau des Vakuumventils nachteilig. Weist die Tanksicherungsarmatur ein Kreuzstück mit einem Zentralanschluss auf, benötigt das Vakuumventil ein separates Eckgehäuse, welches zusätzliche Kosten bedingt, schlechter zu reinigen ist und den Platzbedarf vergrößert. Alternativ wird ein Tankdeckel benötigt, in welchem Vakuumventile eingebaut werden. Dies erhöht ebenso die Kosten und erfordert einen höheren Aufwand, da unter Umständen separate Reinigungsdüsen mit entsprechender Verrohrung erforderlich sind. Es ist auch bekannt, ein Vakuumventil oben auf dem Kreuzstück der Tanksicherungsarmatur anzubringen. In diesem Fall kann jedoch nur ein einziges Vakuumventil vorgesehen sein und ist die Bauweise für den Einbau der Reinigungseinrichtungen nachteilig. Ein weiterer Nachteil bekannter Vakuumventile ist das Verhalten bei der Reinigung. Um den Dichtsitz zu reinigen, wird bei angehobenem Ventilteller aus Düsen Reinigungsmedium in Richtung auf den Dichtsitz gesprüht, welches zumindest teilweise mit hoher Geschwindigkeit durch den Dichtsitz tritt. Ist eine Auffangvorrichtung nicht vorhanden oder unzureichend ausgelegt, resultiert dies in einer unerwünschten Verschmutzung der Außenseite des Tanks. Beim Anlüften des Ventiltellers entspricht oftmals der Tankdruck nicht dem Umgebungsdruck. Herrscht im Tank nur minimaler Überdruck, entsteht durch das enorme Tankvolumen eine starke Luftströmung nach außen durch das Vakuumventil, die Tropfen des Reinigungsmediums mitreißt. Dadurch entsteht auf der Außenseite oben am Tank eine Sprühnebelwolke, die den Tank verunreinigt und im Extremfall Personen treffen kann. Ein weiterer Nachteil gewichtsbelasteter und vertikal verbauter Vakuumventile ist, dass sich bauartbedingt Schmutz direkt auf der Rückseite des Ventiltellers sammelt.

Aus einem Prospekt der Firma Albert Handtmann Armaturenfabrik GmbH und Co. KG, D-88400 Biberach an der Riss "Prozess- und Sicherheitsarmaturen" (www.handtmann.de), Seite 11, obere Abbildung, ist ein zum vertikalen Einbau ausgelegtes, federbelastetes Vakuumventil mit einer eine Ringschlitzöffnung des Gehäuses umgebenden Fangschale bekannt.

Aus einem Prospekt der Firma GEA Tuchenhagen, 02/2010, "Tanksicherungssystem VARI-TOP", Seite 10/3, ist eine Tanksicherungsarmatur mit einem über ein Eckgehäuse an einem Kreuzstück verbauten vertikalen Vakuumventil bekannt, das gemäß Seite 10/9 eine Ventilteller-Baugruppe mit Ventilteller, Ventilstange und Gewichtsbelastung sowie einer Linearführung im Gehäuse aufweist. Das Vakuumventil wird senkrecht verbaut und weist unterhalb einer Ringschlitzöffnung des Gehäuses eine kragenartige Fangschale für Reinigungsmedien auf, aus der ein Ableitkanal nach unten führt.

Aus US 5048560 A ist eine Tanksicherungsarmatur bekannt, die ein gewichtsbelastetes Überdruckventil mit einer aufgestülpten Schutzkappe sowie ein Klappen-Vakuumventil mit Gewichtsbelastung aufweist. Der Ventilteller des Vakuumventils wird bei der schwenkenden Öffnungsbewegung in einem seitlichen Scharnier geführt. Die Gewichtsbelastung ist auf eine Ventilstange des Ventiltellers aufgefädelt. Alternativ kann anstelle einer Gewichtsbelastung eine Federvorspannung benutzt werden. Das Vakuumventil ist vertikal installiert.

Weiterer Stand der Technik ist enthalten in US 2 028 756, US 2011/056938 A1 und AU 618 316 B2.

Der Erfindung liegt die Aufgabe zugrunde, eine Tanksicherungsarmatur mit wenigstens einem Vakuumventil anzugeben, bei dem die geschilderten Nachteile der am Markt verfügbaren Lösungen vermieden werden, wobei das Vakuumventil ein zuverlässiges Ansprechverhalten gewährleistet und reinigungsfähig ist, und einen Tank mit verbesserter Tanksicherungsarmatur zu schaffen.

Die gestellte Aufgabe wird mit den Merkmalen des Anspruchs 1 und des Anspruchs 17 gelöst.

Da das Vakuumventil mit waagerechter Ventilstange eingesetzt ist, werden die Nachteile vertikal verbauter Vakuumventile vermieden. Die zu bewegende Masse hat den aktiven Massenschwerpunkt zwischen den Enden der Führung, somit bleibt die Reibung der Ventilstange außerordentlich gering, so dass die Ventilteller-Baugruppe in der liegenden Einbauposition durch eine relativ schwache Schließfeder belastet sein kann, die gerade die ausreichende Schließkraft zum sicheren Schließen des Vakuumventils zur Verfügung stellt und ein zuverlässiges Ansprechverhalten auf Unterdruck gewährleistet.

Der Tank ist mit der Tanksicherungsarmatur zuverlässig abgesichert, die mehrere Vorteile erbringt.

Zweckmäßig ist ein Anschlag an der Ventilstange angebracht und ist die Führung zentral verbaut.

Da die Ventilteller-Baugruppe mit dem dünnwandigen Blech-Ventilteller, der hohlen Ventilstange und in Leichtbauweise ausgeführt ist, hat sie eine optimal kleine zu bewegende Masse. Der Blech-Ventilteller gewährleistet die erforderliche Druckfestigkeit bei Überdruck im Tank, beispielsweise von 6 bar, und zwar auch bei großen Nennweiten des Vakuumventils. Das Vakuumventil lässt sich problemlos reinigen und ist mit minimalem Platzbedarf zum Einbau in die Tanksicherungsarmatur geeignet.

Bei einer zweckmäßigen Ausführungsform weist die Führung zwei beabstandete Führungslager, vorzugsweise Gleitlager, für die Ventilstange auf, und ist die Führung in Bezug auf den Dichtsitz so platziert, dass sich zumindest im Endabschnitt des Hubs des Ventiltellers an den Dichtsitz der Massenschwerpunkt der Ventilteller-Baugruppe, vorzugsweise einschließlich des Hubbegrenzungs-Anschlags an der Ventilstange, zwischen den Führungslagern in der Führung befindet. Die Ventilstange hat in den Führungslagern vergrößertes Lagerspiel, mindestens eine leichte Gleitpassung, wodurch an sich wegen der waagrechten Ventilstange Winkelfehler des Ventiltellers in Bezug auf den Dichtsitz auftreten könnten, die den Schließ- und den Öffnungsvorgang behindern würden. Da sich jedoch der Massenschwerpunkt der Ventilteller-Baugruppe zumindest im letzten Abschnitt des Hubs des Ventiltellers an den Dichtsitz zwischen den Führungslagern befindet, entstehen, auch aufgrund der geringen Masse infolge der Leichtbauweise, keine solchen Winkelfehler und setzt die Schließfeder den Ventilteller exakt zentriert auf den Dichtsitz auf.

Zweckmäßig liegt der Massenschwerpunkt der Ventilteller-Baugruppe bei Kontakt zwischen dem Ventilteller und dem Dichtsitz sogar in der Mitte zwischen den Führungslagern. Dies vermeidet in der kritischen Aufsetzphase des Ventiltellers jegliche Winkelfehler.

Zweckmäßig liegt der Abstand zwischen den Führungslagern in der Führung zwischen 15% und 25 % des Dichtsitz-Durchmessers. Daraus resultiert über den gesamten Hub des Ventiltellers eine optimal lange Führungslänge der Ventilstange. Auch bleibt die Ventilstange stabil in der Waagerechten.

Ferner kann der Außendurchmesser der hohlen Ventilstange zwischen 50 % und 75 % des Abstandes zwischen den Führungslagern betragen, so dass auch bei großen Nenndurchmessern des Vakuumventils mit geringer Masse der Ventilteller-Baugruppe deren stabile Führung gewährleistet ist.

Für die Leichtbauweise der Ventilteller-Baugruppe bietet es sich an, den Ventilteller als mit der Ventilstange verschweißten Blechformteil auszubilden, der konstante Wandstärke, einen flachen peripheren Dichtrand zur Zusammenarbeit mit dem Dichtsitz und eine zentrale Bombierung hat, wobei sich die Bombierung vom Dichtsitz weg wölbt. Durch diese Gestaltung des Ventiltellers wird auch die erforderliche Druckfestigkeit des Vakuumventils bei Überdruck im Tank erreicht, beispielsweise bis zu 6 bar. Hingegen hebt der Ventilteller bei geringem Unterdruck im Tank zuverlässig ab, beispielsweise bei 3 mbar.

Zweckmäßig ist der Anschlag am freien Ende der Ventilstange angebracht, vorzugsweise verschraubt, und ist zwischen dem Anschlag, der auf die Führung ausgerichtet ist, und der Führung die Schließfeder installiert. Die Schließfeder ist z.B. nach Abnahme des Anschlags austauschbar und/oder wegnehmbar.

Das Vakuumventil kann, falls zweckmäßig, alternativ mit vertikaler Ventilstange eingebaut sein, wobei dann die Schließfeder gegebenenfalls weggelassen wird und nur die im Massenschwerpunkt angreifende Gewichtskraft das Ansprechverhalten bestimmt.

In einer zweckmäßigen Ausführungsform ist die Führung über wenigstens einen Steg in dem den Dichtsitz bildenden Gehäuse festgelegt. Das Gehäuse kann eine ringschlitzförmige Öffnung zur Außenumgebung haben, um bei Ansprechen des Vakuumventils auf Unterdruck den Unterdruck abzubauen. Um eine optimal lange Führungslänge für die Ventilstange sicherzustellen, kann sich, z.B. wegen der Bombierung des Ventiltellers, die Führung im Dichtsitz über den Dichtsitz hinaus in Richtung zum Ventilteller erstrecken.

Herstellungstechnisch einfach ist das Gehäuse mit der Führung ein einstückiges Gußteil. Dieses Gußteil kann integriert eine angeformte Fangstruktur zum Sammeln und Abführen eines Reinigungsmediums haben.

Im Hinblick auf eine automatisierte Reinigung ist es zweckmäßig, wenn am Gehäuse dem Dichtsitz axial abgewandt eine auf den Anschlag an der Ventilstange ausgerichtete, manuelle und/oder pneumatische Anlüftvorrichtung vorgesehen ist. Die Anlüftvorrichtung hebt den Ventilteller über einen vorbestimmten Hub, der kleiner ist als der maximale Ansprechhub, vom Dichtsitz ab, um ein Reinigungsmedium unter Druck zumindest über den Dichtsitz und durch das Vakuumventil und die ringschlitzförmige Öffnung zur Außenumgebung zu führen.

Im Hinblick auf gute Dichtwirkung mit minimaler Haftneigung weist der Dichtsitz eine Lippendichtung aus elastomerem Material auf, die z.B. durch einen außen am Gehäuse festgelegten Ringeinsatz fixiert ist.

Bevorzugt wird das Vakuumventil montiert, indem über den Ringeinsatz ein Ringflansch, beispielsweise mit einer Spannschelle am Gehäuse festgelegt wird. Dieser Ringflansch kann einen mit radialem Abstand über den Dichtsitz vorspringenden Ringkragen bilden oder aufweisen, der zur Strömungsführung auch bei der Reinigung mit angelüftetem Ventilteller nutzbar ist. Der Ringflansch kann im Übrigen ein seitlicher Anschlussflansch eines Kreuzstücks der Tanksicherungsarmatur sein, so dass sich das Vakuumventil mit geringem Platzbedarf, direktem Zugang zum Kreuzstück und günstiger Nähe zu Reinigungseinrichtungen montieren lässt.

In einer Ausführungsform ist das Vakuumventil mit liegender Ventilstange direkt seitlich an dem Anschlussflansch eines Kreuzstücks der Tanksicherungsarmatur montiert.

Um einen höheren Durchsatz zu erzielen, können sogar mehrere Vakuumventile mit liegenden Ventilstangen am Kreuzstück der Tanksicherungsarmatur montiert sein.

Im Hinblick auf eine gute und automatisierte Reinigung kann es schließlich zweckmäßig sein, am Gehäuse axial dem Dichtsitz abgewandt eine Fangstruktur vorzusehen, die nicht nur zur Zuluft- und Abluftführung dient, sondern auch ein Reinigungsmedium auffängt, abscheidet und ableitet, so dass die Tankaußenseite nicht verschmutzt wird. Die Fangstruktur kann an einer Seite der Öffnung zur Außenumgebung an einer Auffangschale einen umfänglichen, im Querschnitt C-förmigen und hinterschnittenen Schalenrand und einen von der anderen Seite der Öffnung vorgesehenen, in den Schalenrand frei eingreifenden, konischen Ringflansch am Gehäuse umfassen, sowie eine das Abführen des Reinigungsmediums in die Auffangschale verbessernde Radialrippe, die sich an der Außenseite des Gehäuses im Wesentlichen vertikal erstreckt. Die Radialrippe kann auf einen Ableitkanal aus der Fangschale ausgerichtet sein und nutzt die Haftungsneigung der flüssigen Bestandteile des Reinigungsmediums, um diese gezielt über den Ringflansch in die Auffangschale zu leiten und am Mitreißen mit der Abluftströmung zu hindern. Zweckmäßig bildet die Fangstruktur einen um etwa 180° umgelenkten Strömungsweg, in welchem durch eine düsenähnliche Gestaltung sogar eine intensive Fliehkraftabscheidung des Reinigungsmediums gewährleistet wird. Dabei kann z.B. aus gusstechnischen Gründen die Radialrippe mit einem konkav gerundeten Kamm zunächst in den Ringflansch führen und sich unter dem Ringflansch zum Boden der Auffangschale fortsetzen.

Anhand der Zeichnung werden Ausführungsformen des Erfindungsgegenstandes erläutert. Es zeigen:
- Fig. 1: einen Achsschnitt einer als nicht beschränkendes Ausführungsbeispiel gezeigten Tanksicherungsstruktur mit einem liegend verbauten Vakuumventil,
- Fig. 2: einen Achsschnitt des Vakuumventils im geschlossenen Zustand, optional ausgerüstet mit einer Anlüftvorrichtung und einer Fangstruktur,
- Fig. 3: eine geschnittene Perspektivansicht eines Gehäuses des Vakuumventils,
- Fig. 4: einen Achsschnitt analog zu Fig. 2, bei auf Unterdruck ansprechendem Vakuumventil,
- Fig. 5: einen Achsschnitt analog zu Fig. 2 und Fig. 4 bei zu einem Reinigungszyklus gelüftetem Vakuumventil,
- Fig. 6: das Vakuumventil in senkrechter Einbaulage als Alternativlösung im Achsschnitt, und
- Fig. 7: ein Ausführungsbeispiel einer Tanksicherungsarmatur mit mehreren liegend verbauten Vakuumventilen.

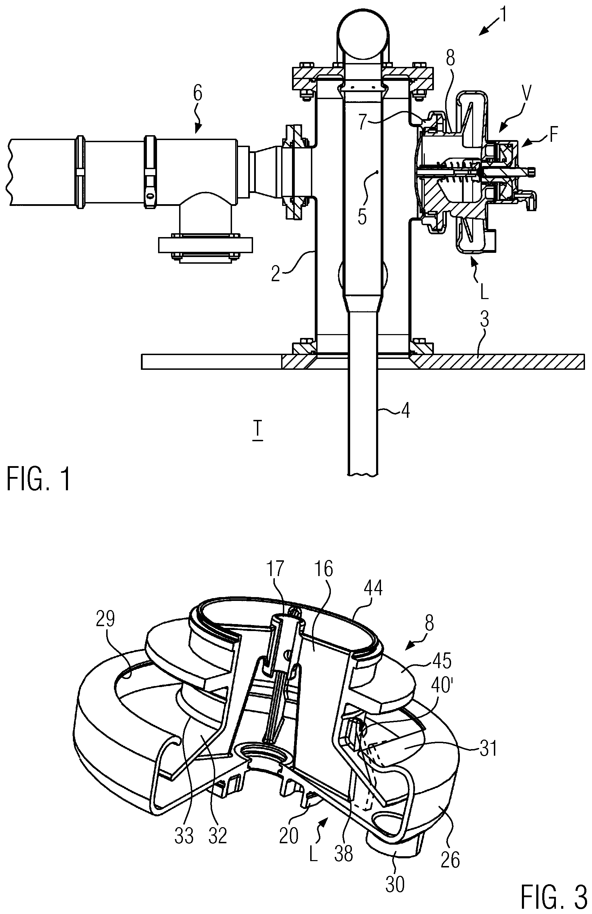

Fig. 1 verdeutlicht für einen Tank T, der über mindestens eine Leitung an eine Getränkeabfüllanlage angeschlossen ist, eine Tanksicherungsarmatur 1 ausgestattet mit mindestens einem liegend verbauten Vakuumventil V und einem angedeuteten Überdruckventil 6. Das Vakuumventil V ist mit einem Gehäuse 8 an einem Anschlussflansch 7 montiert, der seitlich aus einem stehenden Kreuzstück 2 herausführt, das auf einer Tankwand 3 oder einem Aufsatzfuß 3 montiert ist. Das Vakuumventil V kann als Option mit einer integrierten Fangstruktur L und/oder einer Lüftvorrichtung F ausgestattet sein. Im Kreuzstück 2 ist z.B. zentral eine Reinigungssonde 4 mit Düsenöffnungen 5 installiert. Das Vakuumventil V dient zur Unterdruckabsicherung des Tanks T und öffnet bei einem vorbestimmten Unterdruck selbsttätig eine Verbindung zur Außenumgebung. Normalerweise befindet sich das Vakuumventil in der gezeigten Schließstellung, in der es prozessbedingten Überdruck im Tank T aufnimmt. Zum Reinigen zumindest eines Dichtsitzes 44 des Vakuumventils V kann dieses durch die Lüftvorrichtung F gelüftet werden, wobei dann unter Druck appliziertes Reinigungsmedium in der Fangstruktur L aufgefangen und abgeleitet wird.

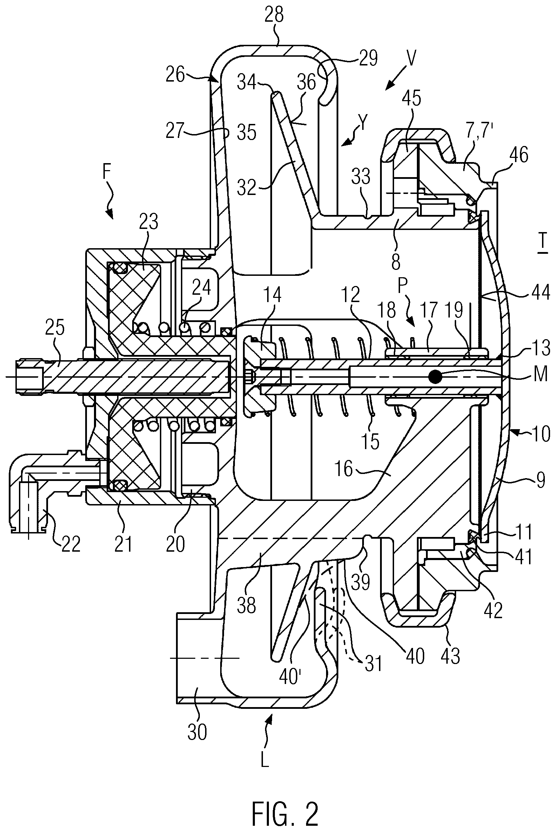

In Fig. 2 ist das Vakuumventil V in der Schließstellung gezeigt. Das Vakuumventil V weist im Gehäuse 8 eine Ventilteller-Baugruppe P auf, die in Leichtbauweise ausgeführt ist und einen Ventilteller 9 aus dünnwandigem Blech mit gleichbleibender Wandstärke mit einer zentralen Bombierung 10 nach rechts, einem peripheren flachen Dichtrand 11, sowie eine zentrale, hohl ausgebildete Ventilstange 12, die mit dem Ventilteller 9 verschweißt sein kann, und einen am freien Ende der Ventilstange 12 angebrachten Hubbegrenzungs-Anschlag 14 umfasst, der beispielsweise eingeschraubt ist. Das Vakuumventil V ist mit im Wesentlichen waagerechter Ventilstange 12 verbaut.

Im Gehäuse 8 ist über mindestens einen Steg 16 zentral eine hier rohrförmige Führung 17 vorgesehen, in der zwei mit einem Abstand eingebaute Führungslager 18, 19 für die Ventilstange 12 untergebracht sind. Die Ventilstange 12 ist leichtgängig verschiebbar in den Führungslagern 18, 19 geführt. Die Führung 17 erstreckt sich in Fig. 2 z.B. nach rechts über die Ebene des am Gehäuse 8 geformten, hier ringförmigen Dichtsitzes 44 hinaus in Richtung zum Ventilteller 9. Der aktive Massenschwerpunkt M der Ventilteller-Baugruppe P in Leichtbauausführung liegt zumindest bei Kontakt zwischen dem Ventilteller 9 und dem Dichtsitz 44 in etwa in der Mitte zwischen den beiden Führungslagern 18, 19, so dass aus der aufgrund der Leichtbauweise ohnedies geringen Gewichtskraft der Ventilteller-Baugruppe P Winkelfehler des Ventiltellers 9 in Bezug auf den Dichtsitz 44 vermieden werden. Zwischen dem Anschlag 14 und der Führung 17 ist eine Schließfeder 15 eingesetzt, die nach Entfernen des Anschlags 14 wegnehmbar oder/und austauschbar ist, die Schließkraft zum Anlegen des Ventiltellers 9 an den Dichtsitz 44 generiert, und das Ansprechverhalten auf Unterdruck auf der Seite des Ventiltellers 9 mitbestimmt.

Der Dichtsitz 44 ist mit einer Lippendichtung 41 aus elastomerem Material ausgestattet, die beispielsweise durch einen auf das Gehäuse 8 aufgebrachten Ringeinsatz 42 festgelegt ist und, beispielsweise, bei geschlossenem Vakuumventil mit dem Dichtrand 11 zusammenarbeitet.

Unter Bezug auf Fig. 1 ist ferner in Fig. 2 ein Ringflansch 7, 7' gezeigt, der über den Ringeinsatz 42 gegen einen Befestigungsflansch 45 des Gehäuses 8 geschoben und beispielsweise durch eine lösbare Spannschelle 43 festgelegt ist, beispielsweise um das Vakuumventil am Kreuzstück 2 in Fig. 1 zu montieren. Der Ringflansch 7, 7' kann einen mit radialem Abstand über den Dichtsitz 44 vorstehenden Kragen 46 aufweisen, der zum Anschweißen dient, aber auch zur Strömungsführung, z.B. bei einem Reinigungszyklus, von Vorteil sein kann.

Alternativ kann das Vakuumventil V mit im Wesentlichen waagrecht liegender Ventilstange 12 auch an anderer Stelle eines Tanks T verbaut sein.

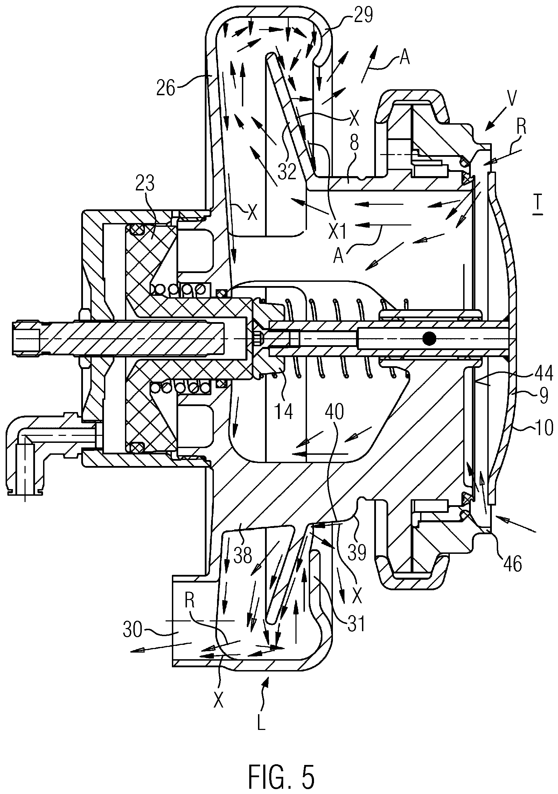

Auf einen Ansatz 20 des Gehäuses 8 ist die Anlüftvorrichtung F aufgebracht, die einen Zylinder 21 mit einem gegen eine Rückstellfeder 24 verstellbaren Kolben 23 enthält, der über einen Pneumatikanschluss 22 mit Druckluft beaufschlagbar bzw. entlastbar ist und mit dem Anschlag 14 zusammenwirkt, um das Vakuumventil V zu lüften (siehe Fig. 5). Im Zylinder 21 kann ein Initiator 25 vorgesehen sein, um die Schließstellung des Ventiltellers 9 zu überwachen. Die Anlüftvorrichtung F ist eine optionale Ausstattung des Vakuumventils V.

Als weitere Ausstattung des Vakuumventils V kann am Gehäuse 8 die Fangstruktur L angeformt sein. Diese umfasst eine kragenartige Auffangschale 26, deren Boden 27 z.B. nach außen und nach links geringfügig zurückweicht und zu einem hier horizontal mündenden Ableitkanal 30 führt. Die Auffangschale 26 besitzt einen etwa parallel zum Gehäuse verlaufenden im Querschnitt C-förmigen Außenwand-Bereich 28, an welchen sich ein einwärts in Richtung zum Boden 27 überbogener Schalenrand 29 anschließt, der im Abstand vom Gehäuse 8 frei endet. Der Schalenrand 29 ist gebogen, um eine Führungsfläche für eine Luft- oder Reinigungsmediumströmung zu bilden, die ins Innere der Auffangschale 26 zielt. Die Auffangschale 26 ist an einer dem Dichtsitz 44 axial abgewandten Seite einer ringschlitzartigen, zur Außenumgebung offenen Öffnung Y des Gehäuses 8 angeordnet.

An der gegenüberliegenden Seite der Öffnung Y ist am Gehäuse 8 ein z.B. konischer Ringflansch 32 angeformt, der mit einem beispielsweise kreisrunden freien Rand 34 endet und sich vom Gehäuse 8 z.B. schräg in Richtung vom Dichtsitz 44 weg in die Auffangschale 26 hinein erstreckt (Konusöffnungswinkel z.B. zwischen 180° und 120°, z.B. etwa 130°). Der Ringflansch 32 bildet eine Schürze oder einen Schirm, hat eine zum Boden 27 weisende Unterseite 35 und eine zum Schalenrand 29 weisende Oberseite 36. Der Rand 34 wird vom Schalenrand 29 mit Abstand übergriffen, d.h., der Schalenrand 29 endet näher am Gehäuse 8 als der Rand 34.

Im Bereich des Ableitkanals 30 ist am Schalenrand 29 eine Verbreiterung 31 angeformt, die sich zu beiden Seiten des Ableitkanals 30 über in etwa gleiche Winkelbereiche (z.B. 30° - 60°) erstreckt und im Abstand von der Außenseite 36 des Ringflansches 32 endet. Die Fangstruktur L bildet einen um in etwa 180° umgelenkten Strömungsweg in das oder aus dem Vakuumventil V. Die Verbreiterung 31 kann, wie gezeigt, zum Dichtsitz 44 parallel sein, oder wie gestrichelt in Fig. 3 und 2 angedeutet, vom Ringflansch 32 weggebogen sein.

Ferner ist im Bereich des Ableitkanals 30 an der Außenseite des Gehäuses 8, z.B. beginnend an einer Umfangsnut 33, eine Radialrippe 38 angeformt, welche in etwa achsparallel ist und den Ringflansch 32 durchdringt und in den Boden 27 der Auffangschale 26 einläuft. Der Beginn der Radialrippe 38 ist gerundet. Die Radialrippe 38 hat einen Kamm 40, dessen Höhe vom Beginn 39 bis zum Boden 27 der Fangschale 26 allmählich zunimmt, so dass in liegender Einbauposition des Vakuumventils V zumindest der Abschnitt des Kamms 40 vom Beginn 39 bis zum Ringflansch 32 und oberhalb der Verbreitung 31 schräg nach links in die Auffangschale 26 abfällt. Alternativ, und z.B. aus gusstechnischen Gründen, könnte der Kamm 40' konkav gerundet (gestrichelt angedeutet) in den Ringflansch 32 geführt und darunter achsparallel zum Boden 27 fortgesetzt werden.

Das Gehäuse 8 ist gemäß Fig. 3 zweckmäßig als einstückiges Gußteil ausgebildet und enthält ein- oder angeformt alle vorerwähnten, zum Gehäuse 8 gehörigen Komponenten des Vakuumventils.

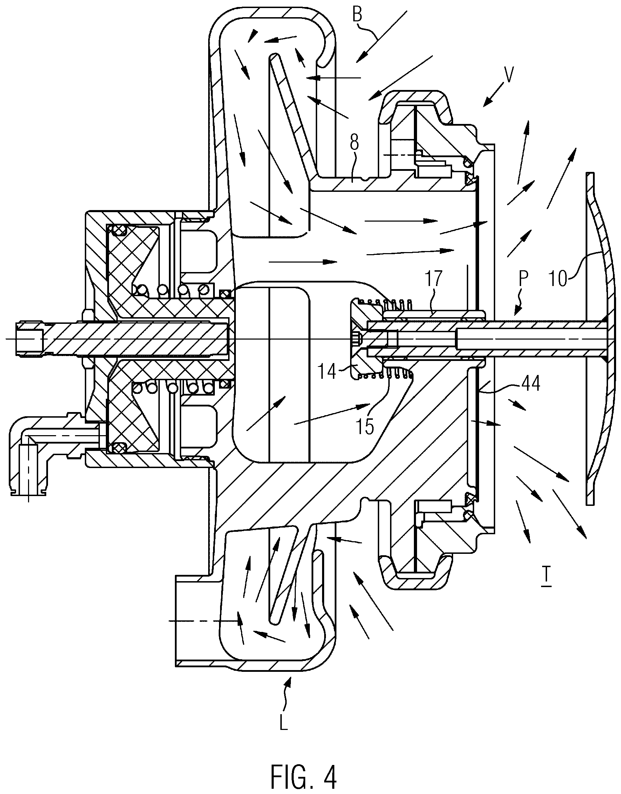

Fig. 4 verdeutlicht das Vakuumventil V nach Ansprechen auf unzulässigen Unterdruck im Tank T. Die Ventilteller-Baugruppe P ist gegen die Schließfeder 15 bis auf Kontakt des Anschlags 14 an der Führung 17 vom Dichtsitz 44 abgehoben. Umgebungsluft (Pfeile B) strömt durch die Fangstruktur L in das Gehäuse 8 und durch den Dichtsitz 44 in den Tank T. Dabei wird die Umgebungsluft (Pfeile B) in der Fangstruktur L mindestens 3-fach umgelenkt.

Fig. 5 verdeutlicht das Vakuumventil in angelüfteter Stellung durch Beaufschlagen des Kolbens 23 bis in dessen Endstellung, so dass der Ventilteller 9 in etwa nur bis auf die Höhe des Kragens 46 vom Dichtsitz 44 abgehoben ist. Unter Druck stehendes Reinigungsmedium (Pfeile R) strömt ggfs. zusammen mit Abluft (Pfeile A) aus dem Tank T in das Gehäuse 8, wobei der Ventilteller 9 an seinen Ober- und Unterseiten wie auch der Dichtsitz 44 gereinigt werden, und auch der Innenraum des Vakuumventils V. Die Mischung aus Abluft und Reinigungsmedium wird zunächst durch den Ringflansch 32 gegen den Boden der Auffangschale 26 geleitet, wobei sich flüssige Bestandteile aus dem Reinigungsmedium (Pfeile X) am Boden der Auffangschale 26 sammeln und unter Schwerkrafteinfluss nach unten zum Ableitkanal 30 strömen. Mit der Abluft (Pfeile A) mitgerissene flüssige Bestandteile des Reinigungsmediums gelangen auch in den Bereich des einwärts gewölbten Schalenrandes 29 und zur Außenseite 36 des Ringflansches 32, wobei sie sich durch Fliehkraftwirkung an der Außenseite 36 des Ringflansches 32 absetzen und zum Gehäuse 8 hin sowie zum Ableitkanal 30 nach unten geführt werden. Vom einwärts gewölbten Schalenrand 29 abtropfende flüssige Bestandteile fallen auf die Außenseite des Gehäuses 8 und fließen um dieses herum nach unten zur Radialrippe 40, an der sie durch Adhäsion haften und über den gerundeten Beginn 39 und den nach links abfallenden Kamm 40 über die Verbreiterung 31 hinweg in Richtung zum Ableitkanal 30 geführt werden, während Abluft nach außen austritt. Über die Radialrippe 38 werden sogar aus dem Wirkbereich der Fangschale 26 nach rechts ausgetretene Flüssigbestandteile des Reinigungsmediums zuverlässig zurück in die Aufangschale 26 gebracht. Dadurch unterbleibt eine Verschmutzung der Außenseite des Tanks.

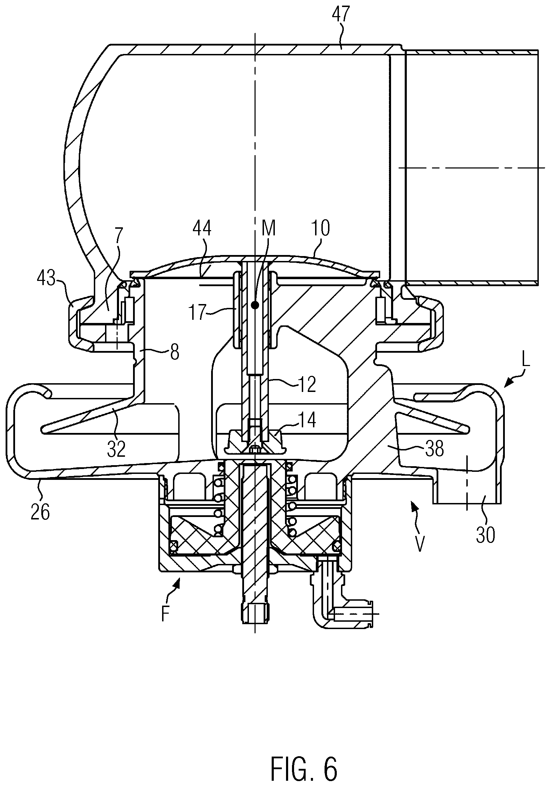

Fig. 6 verdeutlicht, dass das Vakuumventil V alternativ auch mit stehender Ventilstange 12 eingebaut werden kann, beispielsweise an einem unteren Anschlussflansch 7 eines Rohrkanals 47, wobei jedoch die in Fig. 2 gezeigte Schließfeder weggelassen ist und das Ansprechverhalten des Vakuumventils durch die Massenkraft im Massenschwerpunkt M bestimmt ist. Die Fangstruktur L sammelt auch hier bei einem Reinigungszyklus flüssige Bestandteile und führt sie über den hier vertikal nach unten mündenden Ableitkanal 30 ab.

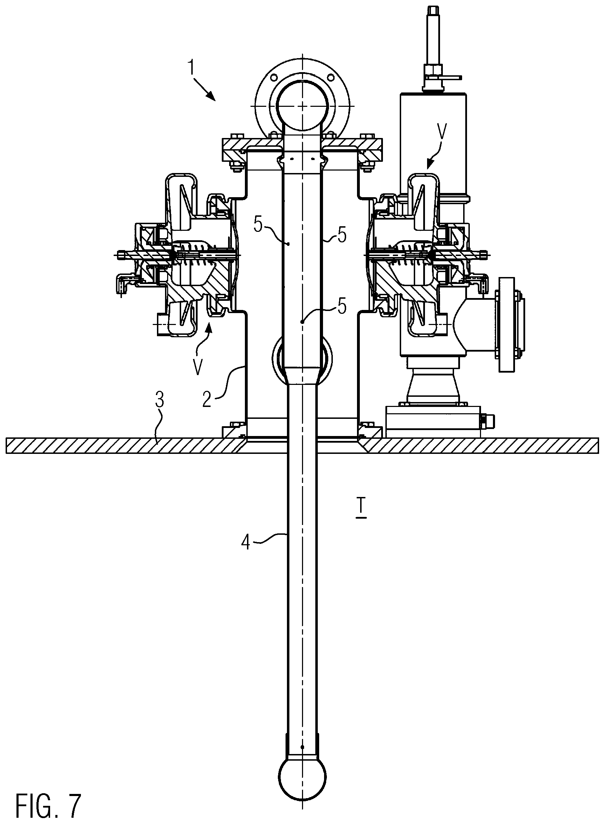

In Fig. 7 ist angedeutet, dass das Kreuzstück 2 der Tanksicherungsarmatur 1 in dieser Ausführungsform mit mindestens zwei Vakuumventilen V, jeweils mit liegender Ventilstange 12, ausgestattet ist, um einen höheren Durchsatz zu gewährleisten. An dem Kreuzstück 2 können sogar mehr als zwei Vakuumventile V verbaut sein, die bei einem Reinigungszyklus angelüftet und aus den Düsenöffnungen 5 der Reinigungslanze 4 gereinigt werden.

Durch den horizontalen Einbau ist es möglich, das Vakuumventil V totraumfrei in das Kreuzstück 2 der Tanksicherungsarmatur 1 einzubauen. Dies bietet wesentliche Vorteile bei einem Reinigungszyklus, da der Dichtsitz 44 im Kreuzstück 2 direkt gegenüber der Reinigungsleitung bzw. der Düsen 5 der Reinigungssonde liegt und leicht gereinigt werden kann. Ein Eckgehäuse zum Installieren des Vakuumventils am Kreuzstück entfällt, was einen Kostenvorteil hat und Bauraum spart. Die Fangstruktur L ist mit dem Ringflansch 32, der Verbreiterung 31 und der Radialrippe 38 sehr zuverlässig und wirkt beim Abblasen des Tanks T und gleichzeitigem Reinigen des Vakuumventils V als Fliehkraftabscheider für mitgerissenes Reinigungsmedium. Dadurch wird eine Verschmutzung der Tankaußenseite und eine Gefährdung in der Nähe befindlicher Personen verhindert. Durch die waagerechte Anordnung des Vakuumventils und die Fangstruktur L wird eine Verschmutzung der Ventilteller-Rückseite durch Schmutz aus der Tankumgebung vermieden.

## Patentansprüche

1. Tanksicherungsarmatur (1) mit mindestens einem Vakuumventil (V), das in einem Gehäuse (8) einen Dichtsitz (44) und eine zur Zusammenarbeit mit dem Dichtsitz (44) relativ zu diesem linearbeweglich gelagerte Ventilteller-Baugruppe (P) mit einem Ventilteller (9), und einer Ventilstange (12) aufweist, wobei zumindest ein Teil der Ventilteller-Baugruppe (P) in einer Führung (17) geführt ist, wobei die Ventilteller-Baugruppe (P) mit in Gebrauch zumindest im Wesentlichen waagerechter Ventilstange (12) in der Tanksicherungsarmatur (1) verbaut ist, **dadurch gekennzeichnet, dass** der aktive Massenschwerpunkt (M) der Ventilteller-Baugruppe (P) zumindest im Endabschnitt des Hubs des Ventiltellers (9) an den Dichtsitz (44) zwischen zwei Enden der Führung (12) angeordnet ist.

2. Tanksicherungsarmatur nach Anspruch 1, **dadurch gekennzeichnet, dass** an der Ventilstange (12) ein Hubbegrenzungsanschlag (14) angeordnet und die Führung (17) zentral im Vakuumventil (V) verbaut ist.

3. Tanksicherungsarmatur nach Anspruch 1, **dadurch gekennzeichnet, dass** die Ventilteller-Baugruppe (P) mit einem dünnwandigen Blech-Ventilteller (10) und hohl ausgebildeter Ventilstange (12) und in Leichtbauweise ausgeführt ist.

4. Tanksicherungsarmatur nach Anspruch 1 oder 3, **dadurch gekennzeichnet, dass** die Führung (17) zwei beabstandete Führungslager (18, 19), vorzugsweise Gleitlager, für die Ventilstange (12) aufweist, und dass die Führung (17) in Bezug auf den Dichtsitz (44) so platziert ist, dass sich zumindest im Endabschnitt des Hubs des Ventiltellers (9) an den Dichtsitz (44) der aktive Massenschwerpunkt (M) der Ventilteller-Baugruppe (P), einschließlich eines Hubbegrenzungsanschlags (14) an der Ventilstange (12), zwischen den Führungslagern (18, 19) befindet.

5. Tanksicherungsarmatur nach Anspruch 4, **dadurch gekennzeichnet, dass** der Massenschwerpunkt (M) der Ventilteller-Baugruppe (P) bei Kontakt zwischen dem Ventilteller (9) und dem Dichtsitz (44) in der Achse der Ventilstange (12) und annähernd in der Mitte zwischen den Führungslagern (18, 19) liegt.

6. Tanksicherungsarmatur nach Anspruch 4, **dadurch gekennzeichnet, dass** der Abstand zwischen den Führungslagern (18, 19) zwischen 15% und 25% des Dichtsitz-Durchmessers beträgt.

7. Tanksicherungsarmatur nach Anspruch 4, **dadurch gekennzeichnet, dass** der Außendurchmesser der hohlen Ventilstange (12) zwischen 50% und 75% des Abstands zwischen den Führungslagern (18, 19) beträgt, und dass, vorzugsweise, zwischen den Führungslagern (18, 19) und der Ventilstange (12) mindestens eine leichte Gleitpassung mit vergrößertem Lagerspiel vorgesehen ist.

8. Tanksicherungsarmatur nach Anspruch 3, **dadurch gekennzeichnet, dass** der Ventilteller (9) ein mit der Ventilstange (12) verschweißter Blechformteil mit konstanter Wandstärke, einem flachen peripheren Dichtrand (11) und einer zentralen Bombierung (10) ist, wobei die Bombierung (10) in Richtung von Dichtsitz (44) weg gewölbt ist.

9. Tanksicherungsarmatur nach Anspruch 4, **dadurch gekennzeichnet, dass** der Hubbegrenzungs-Anschlag (14) am freien Ende der Ventilstange (12) angebracht, vorzugsweise verschraubt, ist, und dass zwischen dem auf die Führung (17) ausgerichteten Anschlag (14) und der Führung (17) eine Schließfeder (15), vorzugsweise austauschbar und/oder wegnehmbar, installiert ist.

10. Tanksicherungsarmatur nach Anspruch 4, **dadurch gekennzeichnet, dass** die Führung (17) über wenigstens einen Steg (16) in dem den Dichtsitz (44) bildenden Gehäuse (8) festgelegt ist, das eine ringschlitzförmige, zur Außenumgebung offene Öffnung (Y) aufweist, und dass, vorzugsweise, sich die Führung (17) im Dichtsitz (44) über den Dichtsitz (44) hinaus in Richtung zum Ventilteller (9) erstreckt.

11. Tanksicherungsarmatur nach Anspruch 1, **dadurch gekennzeichnet, dass** das Gehäuse (8) mit der Führung (17) ein einstückiges Gußteil ist, vorzugsweise mit einer angeformten Fangstruktur (L).

12. Tanksicherungsarmatur nach Anspruch 4, **dadurch gekennzeichnet, dass** am Gehäuse (8) dem Dichtsitz (44) axial abgewandt eine auf den Anschlag (14) ausgerichtete, vorzugsweise pneumatische, Anlüftvorrichtung (F) für die Ventilteller-Baugruppe (P) vorgesehen ist.

13. Tanksicherungsarmatur nach Anspruch 1, **dadurch gekennzeichnet, dass** der Dichtsitz (44) eine Lippendichtung (41) aus elastomerem Material aufweist, die durch einen außen am Gehäuse (8) festgelegten Ringeinsatz (42) fixiert ist, und dass, vorzugsweise, über dem Ringeinsatz (42) ein Ringflansch (7, 7'), vorzugsweise ein Anschlussflansch eines Kreuzstücks (2) der Tanksicherungsarmatur (1), vorzugsweise mit einer Spannschelle (43), demontierbar am Gehäuse (8) angebracht ist.

14. Tanksicherungsarmatur nach Anspruch 1, **dadurch gekennzeichnet, dass** das Vakuumventil (V) direkt seitlich an einem Anschlussflansch (7) eines Kreuzstücks (2) der Tanksicherungsarmatur (1) montiert ist.

15. Tanksicherungsarmatur nach Anspruch 14, **dadurch gekennzeichnet, dass** am Kreuzstück (2) mehrere Vakuumventile (V) montiert sind.

16. Tanksicherungsarmatur nach wenigstens einem der vorhergehenden Ansprüche, **dadurch gekennzeichnet, dass** am Gehäuse (8) axial dem Dichtsitz (44) abgewandt eine Zu-, Abluft-, Führungs- und Reinigungsmedium-Abscheidungs-Fangstruktur (L) angeformt ist, die an einer Seite der Öffnung (Y) an einer Auffangschale (26) einen umfänglichen, C-förmigen, einseitig offenen und überbogenen Schalenrand (29) und an der anderen Seite der Öffnung (Y) einen in den Schalenrand (29) frei eingreifenden, vorzugsweise konischen, Ringflansch (32) am Gehäuse (8) sowie einen an die Auffangschale (26) angeschlossenen Ableitkanal (30) und an der Außenseite des Gehäuses (8) eine auf den Ableitkanal (30) ausgerichtete vertikale Radialrippe (38) umfasst, die, vorzugsweise, mit konkav gerundetem Kamm (40') von der Außenseite des Gehäuses (8) in den Ringflansch (32) führt und unter dem Ringflansch (32) in die Auffangschale (26) fortgesetzt ist.

17. Tank (T) mit einer Tanksicherungsarmatur (1) nach Anspruch 1, der mit wenigstens einer Leitung an eine Getränkeabfüllanlage angeschlossen oder anschließbar ist.

## Claims

1. Tank protection armature (1) comprising at least one vacuum valve (V) having a sealing seat (44) in a housing (8), and a valve disc-mounting group (P) including a valve disc (9) and a valve rod (12) for co-action with the sealing seat (44), the valve disc-mounting group (P) being supported for a linear movement relative to the sealing seat (44), wherein at least a part of the valve disc-mounting group (P) is guided in a guidance (17), and wherein the valve disc-mounting group (P) in use is installed in the tank protection armature (1) at least with substantially horizontal valve rod (12), **characterized in that** the active mass center (M) of gravity of the valve disc-mounting group (P) is positioned at least in the end portion of the stroke of the valve disc (9) towards the sealing seat (44) between two ends of the guidance (17).

2. Tank protection armature according to claim 1, **characterized in that** a stroke-limiting stop (14) is arranged at the valve rod (12), and that the guidance (17) is installed centrally in the vacuum valve (V).

3. Tank protection armature according to claim 1, **characterized in that** valve disc-mounting group (P) is formed with thin-walled sheet metal-valve disc (10) and a hollow valve rod (12) and as a lightweight structure.

4. Tank protection armature according to claim 1 or claim 3, **characterized in that** the guidance (17) comprises two distant guiding bearings (18, 19), preferably plain bearings, for the valve rod (12), and that the guidance (17) is placed in relation to the sealing seat (44), such that at least in the end section of the stroke of the valve disc (9) towards the sealing seat (44), the active mass center (M) of gravity of the valve disc-mounting group (P) inclusive of a stroke-limiting stop (14) at the valve rod (12) is situated between the guiding bearings (18, 19).

5. Tank protection armature according to claim 4, **characterized in that** the mass center (M) of gravity of the valve disc-mounting group (P), in case of contact between the valve disc (9) and the sealing seat (44), is situated in the axis of the valve rod (12) and substantially in the middle between the guiding bearings (18, 19).

6. Tank protection armature according to claim 4, **characterized in that** the distance between the guiding bearings (18, 19) amounts to between 15% and 25% of the diameter of the sealing seat (44).

7. Tank protection armature according to claim 4, **characterized in that** the outer diameter of the hollow valve rod (12) amounts to between 50% and 75% of the distance between the guiding bearings (18, 19), and that preferably, at least a light sliding fit including an enlarged bearing clearance is provided between the guiding bearings (18, 19) and the valve rod (12).

8. Tank protection armature according to claim 3, **characterized in that** the valve disc (9) is a sheet metal-form part having constant wall thickness, a flat peripheral sealing edge (11), and a central curvature (10), and is welded to the valve rod (12), wherein the curvature (10) is curved in a direction away from the sealing seat (44).

9. Tank protection armature according to claim 4, **characterized in that** the stroke-limiting stop (14) is arranged at a free end of the valve rod (12), is preferably screwed-in, and that a closing spring (15) is installed, preferably exchangeably and/or removeably between the stop (14) aligned with the guidance (17) and the guidance (17.

10. Tank protection armature according to claim 4, **characterized in that** the guidance (17) is secured by at least one web (16) in the housing (8) forming the sealing seat (44), that the housing has an opening (Y) formed like an annular slot open to the outer environment, and that, preferably, the guidance (17) extends in the sealing seat (44) beyond the sealing seat (44) in the direction towards the valve disc (9).

11. Tank protection armature according to claim 1, **characterized in that** the housing (8) including the guidance (17) is a unitary casted part, preferably having a formed-in catching structure (L).

12. Tank protection armature according to claim 4, **characterized in that** at the housing (8), axially remote from the sealing seat (44), a, preferably pneumatic, lifting device (F) for the valve disc-mounting group (P) is provided, in alignment with the stop (14).

13. Tank protection armature according to claim 1, **characterized in that** the sealing seat (44) comprises a lip seal (41) made of elastomeric material, which lip seal (41) is fixed by a ring insert (42) secured to the outer side of the housing (8), and that, preferably, a ring flange (7, 7'), preferably a connecting flange of a crosspiece (2) of the tank protection armature (1), preferably is provided by a clip collar (43) dismountably at the housing (8).

14. Tank protection armature according to claim 1, **characterized in that** the vacuum valve (V) is mounted directly and sidewardly at a connecting flange (7) of a crosspiece (2) of the tank protection armature (1).

15. Tank protection armature according to claim 14, **characterized in that** several vacuum valves (V) are mounted at the crosspiece (2).

16. Tank protection armature according to at least one of the preceding claims, **characterized in that** a catching structure (L) for inlet air, outlet air, for guidance and for cleaning medium-separation is formed at the housing (8) axially remote from the sealing seat (44), the catching structure (L) comprising at one side of the opening (Y) at a collecting bowl (26) a circumferential C-shaped, at one side open and overbent bowl edge (29), and at the other side of the opening (Y) a preferably conical-ring flange (32) at the housing (8), freely engaging into the bowl edge (29) as well as a discharge channel (30) connected to the collecting bowl (26) and at the outer side of the housing (8), a vertical radial rib (38) aligned with the discharge channel (30), the radial rib (38), preferably extending with a concavely rounded crest (40') from the outer side of the housing (8) into the ring flange (32), and being continued underneath the ring flange (32) into the collecting bowl (26).

17. Tank (T) having a tank protection armature (1) according to claim 1, which tank is connected or connectable by means of at least one piping to a beverage filling plant.

## Revendications

1. Système de robinetterie de sécurité (1) pour réservoir ou cuve, comprenant au moins une valve à vide (V), qui présente, dans un corps (8), un siège d'étanchéité (44) et un sous-groupe de plateau d'obturation de valve (P) avec un plateau d'obturation de valve (9) et une tige de valve (12), qui, pour coopérer avec le siège d'étanchéité (44), est monté mobile linéairement par rapport à celui-ci, système dans lequel au moins une partie du sous-groupe de plateau d'obturation de valve (P) est guidé dans un guidage (17), et
dans lequel le sous-groupe de plateau d'obturation de valve (P) est implanté dans le système de robinetterie de sécurité (1), avec une tige de valve (12) au moins sensiblement horizontale en service,
**caractérisé**
**en ce que** le centre de gravité de masse (M) actif du sous-groupe de plateau d'obturation de valve (P), est agencé, au moins dans le secteur d'extrémité de la course de déplacement du plateau d'obturation de valve (9) en direction du siège d'étanchéité (44), entre deux extrémités du guidage (17).

2. Système de robinetterie de sécurité de réservoir selon la revendication 1, **caractérisé en ce que** sur la tige de valve (12) est agencée une butée de limitation de course de déplacement (14), et le guidage (17) est placé de manière centrale dans la valve à vide (V).

3. Système de robinetterie de sécurité de réservoir selon la revendication 1, **caractérisé en ce que** le sous-groupe de plateau d'obturation de valve (P) est réalisé avec un plateau d'obturation de valve à paroi mince (10), en tôle, et une tige de valve (12) de configuration creuse, l'ensemble étant d'une construction allégée.

4. Système de robinetterie de sécurité de réservoir selon la revendication 1 ou la revendication 3, **caractérisé en ce que** le guidage (17) présente deux paliers de guidage (18, 19), de préférence des paliers lisses, mutuellement espacés l'un de l'autre et destinés à la tige de valve (12), et **en ce que** le guidage (17) est placé de manière telle par rapport au siège d'étanchéité (44), que, au moins dans le secteur d'extrémité de la course de déplacement du plateau d'obturation de valve (9) en direction du siège d'étanchéité (44), le centre de gravité de masse (M) actif du sous-groupe de plateau d'obturation de valve (P), y compris une butée de limitation de course de déplacement (14) sur la tige de valve (12), se situe entre les paliers de guidage (18, 19).

5. Système de robinetterie de sécurité de réservoir selon la revendication 4, **caractérisé en ce que** le centre de gravité de masse (M) du sous-groupe de plateau d'obturation de valve (P) se situe, en de cas de contact entre le plateau d'obturation de valve (9) et le siège d'étanchéité (44), sur l'axe de la tige de valve (12) et approximativement au milieu entre les paliers de guidage (18, 19).

6. Système de robinetterie de sécurité de réservoir selon la revendication 4, **caractérisé en ce que** la distance d'espacement entre les paliers de guidage (18, 19) vaut entre 15% et 25% du diamètre du siège d'étanchéité.

7. Système de robinetterie de sécurité de réservoir selon la revendication 4, **caractérisé en ce que** le diamètre extérieur de la tige de valve creuse (12) vaut entre 50% et 75% de la distance d'espacement entre les paliers de guidage (18, 19), et **en ce qu'**il est de préférence prévu, entre les paliers de guidage (18, 19) et la tige de valve (12), au moins un léger ajustement glissant avec un jeu de palier augmenté.

8. Système de robinetterie de sécurité de réservoir selon la revendication 3, **caractérisé en ce que** le plateau d'obturation de valve (9) est une pièce de forme en tôle soudée à la tige de valve (12) et présentant une épaisseur de paroi constante, un bord d'étanchéité périphérique (11) plat et une partie centrale bombée (10), la partie bombée (10) étant bombée dans la direction s'éloignant du siège d'étanchéité (44).

9. Système de robinetterie de sécurité de réservoir selon la revendication 4, **caractérisé en ce que** la butée de limitation de course de déplacement (14) est rapportée à l'extrémité libre de la tige de valve (12), de préférence en y étant vissée, et **en ce qu'**entre la butée (14) dirigée vers le guidage (17) et le guidage (17), est installé un ressort de fermeture (15), de préférence de manière interchangeable et/ou amovible.

10. Système de robinetterie de sécurité de réservoir selon la revendication 4, **caractérisé en ce que** le guidage (17) est fixé par l'intermédiaire d'une nervure (16), dans le corps (8) qui forme le siège d'étanchéité (44) et qui présente une ouverture (Y) en forme de fente annulaire, ouverte vers l'extérieur, et **en ce que**, de préférence, le guidage (17) s'étend, à l'intérieur du siège d'étanchéité (44), au-delà du siège d'étanchéité (44) en direction du plateau d'obturation de valve (9).

11. Système de robinetterie de sécurité de réservoir selon la revendication 1, **caractérisé en ce que** le corps (8) est, avec le guidage (17), une pièce moulée d'un seul tenant, sur laquelle est de préférence formée une structure de collecte (L).

12. Système de robinetterie de sécurité de réservoir selon la revendication 4, **caractérisé en ce que** sur le corps (8) est prévu, du côté axialement opposé à celui où se trouve le siège d'étanchéité (44), un dispositif de décollement (F), de préférence pneumatique, dirigé vers la butée (14), pour le sous-groupe de plateau d'obturation de valve (P).

13. Système de robinetterie de sécurité de réservoir selon la revendication 1, **caractérisé en ce que** le siège d'étanchéité (44) présente un joint d'étanchéité à lèvre (41) en un matériau élastomère, qui est fixé par une bague d'insert (42) immobilisée sur l'extérieur du corps (8), et **en ce que**, de préférence, un flasque annulaire (7, 7'), de préférence un flasque de raccordement d'une pièce en croix (2) du système de robinetterie de sécurité de réservoir (1), est rapporté de manière démontable sur le corps (8), par-dessus la bague d'insert (42), de préférence à l'aide d'un collier de serrage (43).

14. Système de robinetterie de sécurité de réservoir selon la revendication 1, **caractérisé en ce que** la valve à vide (V) est montée directement, latéralement, sur un flasque de raccordement (7) d'une pièce en croix (2) du système de robinetterie de sécurité de réservoir (1).

15. Système de robinetterie de sécurité de réservoir selon la revendication 14, **caractérisé en ce que** sur la pièce en croix (2) sont montées plusieurs valves à vide (V).

16. Système de robinetterie de sécurité de réservoir selon l'une des revendications précédentes, **caractérisé en ce que** sur le corps (8), axialement à l'opposé du siège d'étanchéité (44), est formée une structure de séparation et de collecte (L) d'air entrant, d'air d'évacuation sortant et de fluide de nettoyage, qui comprend, sur un côté de l'ouverture (Y), au niveau d'une coupelle de collecte (26), un bord de coupelle (29) périphérique, en forme de C, ouvert d'un côté et coudé en retour, et sur l'autre côté de l'ouverture (Y), sur le corps (8), un flasque annulaire (32) de préférence conique, s'engageant librement dans le bord de coupelle (29), ainsi qu'un canal d'évacuation (30) raccordé à la coupelle de collecte (26), et sur le côté extérieur du corps (8), une nervure radiale (38), verticale, dirigée vers le canal d'évacuation (30) et qui mène, de préférence par une crête (40') arrondie de manière concave, du côté extérieur du corps (8) au flasque annulaire (32), et se prolonge dans la coupelle de collecte (26), sous le flasque annulaire (32).

17. Réservoir ou cuve (T) comprenant un système de robinetterie de sécurité de réservoir (1) selon la revendication 1, qui est raccordé ou peut être raccordé, par l'intermédiaire d'au moins une conduite, à une installation de conditionnement par remplissage, pour boissons.
